# FASCICULE DE BREVET EUROPEEN

(11) **EP 1 047 139 B1**
(45) Date de publication et mention de la délivrance du brevet: **21.11.2007**
(21) Numéro de dépôt: 00401130.0
(22) Date de dépôt: 21.04.2000
(51) Int. Cl.: H01M 2/10, B60K 1/04

(54) **Source d'alimentation en courant continu pour véhicule à moteur électrique**
Gleichstromquelle für ein Elektromotorfahrzeug
Direct current power supply for an electric motor vehicle

(30) Priorité: 23.04.1999 FR 9905198
(43) Date de publication de la demande: 25.10.2000
(73) Titulaire: Oldham France S.A., 62000 Arras Cedex (FR)
(72) Inventeur: Dreulle, Claude Maurice Pierre, 62217 Beaurains (FR); Lenain, Pierre Georges Gérard, 62000 Arras (FR)
(74) Mandataire: Jacobson, Claude

(56) Documents cités:
- EP-A- 0 539 269
- EP-A- 0 575 060
- EP-A- 0 620 604
- EP-A- 0 662 725
- FR-A- 694 508
- GB-A- 905 222
- GB-A- 2 081 495
- US-A- 2 942 058
- US-A- 5 140 744
- US-A- 5 866 276
- PATENT ABSTRACTS OF JAPAN vol. 1995, no. 09, 31 octobre 1995 (1995-10-31) -& JP 07 142046 A (TOYOTA AUTOM LOOM WORKS LTD), 2 juin 1995 (1995-06-02)
- PATENT ABSTRACTS OF JAPAN vol. 013, no. 383 (E-811), 24 août 1989 (1989-08-24) -& JP 01 134851 A (YUASA BATTERY CO LTD), 26 mai 1989 (1989-05-26)
- PATENT ABSTRACTS OF JAPAN vol. 1997, no. 08, 29 août 1997 (1997-08-29) -& JP 09 106831 A (MITSUBISHI HEAVY IND LTD), 22 avril 1997 (1997-04-22)
- PATENT ABSTRACTS OF JAPAN vol. 1998, no. 05, 30 avril 1998 (1998-04-30) -& JP 10 027591 A (MATSUSHITA ELECTRIC IND CO LTD), 27 janvier 1998 (1998-01-27)

## Description

La présente invention est relative à une source d'alimentation en courant continu pour véhicule automoteur électrique, du type comportant un ensemble modulable de batteries d'accumulateurs électriques, électriquement connectées.

Elle est en particulier destinée à l'alimentation d'engins de manutention électrique.

Comme cela est classique, pour l'alimentation des véhicules électriques, on utilise un assemblage de batteries, capables chacune de délivrer une tension, par exemple de l'ordre de 2 volts ou d'un multiple de 2 volts, ces batteries étant placées en série ou en parallèle dans un caisson venant se loger dans un logement prévu à cet effet dans les véhicules.

Comme on le conçoit, afin de diminuer le nombre de cycles de charge et de décharge des batteries et d'augmenter en conséquence leur durée de vie, il est nécessaire d'embarquer un grand nombre de batteries afin de pouvoir disposer d'une énergie électrique suffisante.

Le but de l'invention est de fournir une source d'alimentation pour véhicule automoteur électrique capable de contenir un nombre élevé de batteries d'accumulateurs et ce, dans un encombrement réduit.

Elle a donc pour objet une source d'alimentation du type précité, comportant les batteries disposées dans des coffres gerbables pour constituer une pile de modules élémentaires, caractérisée en ce qu'une partie au moins des coffres comporte une paroi latérale délimitant un passage pour des câbles de raccordement des batteries.

On adapte ainsi l'encombrement général de la source d'alimentation en fonction du nombre de batteries embarquées et l'on diminue donc l'espace libre non occupé.

Dans différents modes de réalisation, la source d'alimentation conforme à l'invention peut en outre comporter une ou plusieurs des caractéristiques suivantes, prises isolément ou selon toutes les combinaisons techniquement possibles :
- l'un au moins des coffres comporte un logement de réception d'un chargeur pour lesdites batteries ;
- la paroi latérale d'une partie au moins des coffres est munie d'ouies d'aération des batteries ;
- la paroi latérale desdits coffres ayant une hauteur supérieure à celle des batteries, les ouies sont délimitées par des découpes formées dans la zone d'extrémité en saillie de ladite paroi latérale des coffres ; et
- la paroi latérale des coffres est dotée de moyens de préhension destinés à coopérer avec un appareil de levage.

D'autres caractéristiques et avantages ressortiront de la description suivante, donnée uniquement à titre d'exemple et faite en référence aux dessins annexés, sur lesquels :
La figure 1 est une vue en perspective d'une source d'alimentation conforme à l'invention, montrant deux modules élémentaires en cours d'empilage ;
La figure 2 montre la source d'alimentation de la figure 1 après empilage des modules ; et
La figure 3 est une vue en perspective d'un module particulier pouvant entrer dans la constitution de la source des figures 1 et 2.

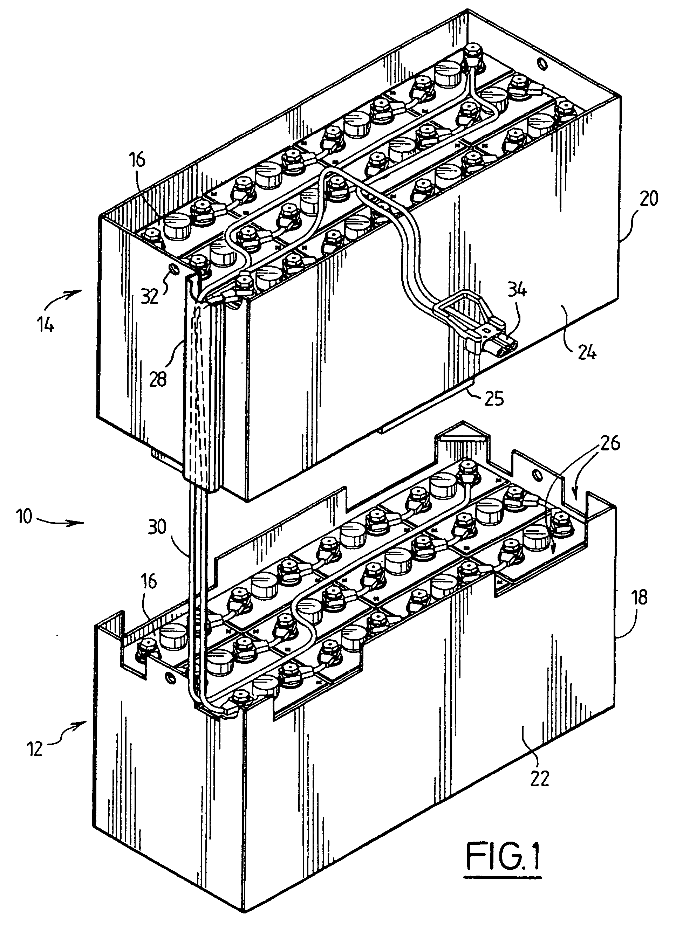

Sur la figure 1, on a représenté une vue en perspective d'une source d'alimentation pour véhicule automoteur électrique, conforme à l'invention, désignée par la référence numérique générale 10, en cours d'assemblage.

Par exemple, elle peut constituer une source d'alimentation pour engins de manutention à traction électrique.

Comme on le voit sur cette figure, la source d'alimentation 10 comporte un ensemble de modules élémentaires inférieur et supérieur, respectivement 12 et 14, constitués chacun par une association de batteries d'accumulateurs électriques, telles que 16, capables chacune de délivrer une tension par exemple égale à 2 volts, ces batteries étant raccordées électriquement en parallèle ou en série.

Plus particulièrement, les batteries 16 des modules sont disposées dans des coffres 18 et 20, respectivement inférieur et supérieur.

Dans l'exemple de réalisation représenté sur la figure, la source d'alimentation est constituée par l'association de deux modules élémentaires 12 et 14.

Bien entendu, on pourrait prévoir un nombre supérieur de tels modules en fonction de l'énergie électrique à embarquer à bord du véhicule.

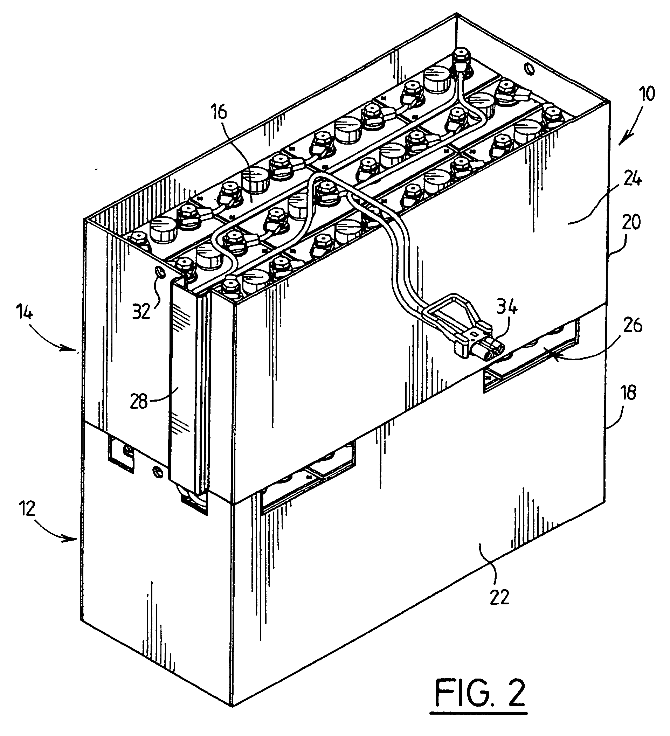

Comme on le voit également sur la figure 2, les coffres 18 et 20 sont gerbables.

On voit en effet que les coffres 18 et 20 ont chacun une forme parallélépipédique et ont une section en coupe transversale de dimensions sensiblement identiques.

En outre, la paroi latérale 22 et 24 constitutive de chaque coffre 18 et 20 a une hauteur supérieure à celle des batteries 16, de sorte qu'elle se prolonge, vers le haut, au-delà de la face supérieure des batteries.

La grande face inférieure du coffre supérieur 20 est doté de pieds tels que 25 conformés de manière à venir s'emboîter, par complémentarité de forme, dans la zone d'extrémité supérieure de la paroi latérale constitutive 22 du coffre inférieur 18.

La zone d'extrémité supérieure de la paroi 22 du coffre inférieur 18 est doté de découpes, telles que 26, délimitant des ouies pour l'aération des batteries 16.

Comme mentionné précédemment, les batteries, placées dans chaque coffre 18 et 20, sont raccordées électriquement en série ou en parallèle.

On voit également que les modules sont également raccordées deux à deux en série ou en parallèle.

Dans le cas où les batteries 16 sont raccordées en parallèle, les modules sont raccordés en série.

Au contraire, si les batteries sont connectées en série, les modules sont raccordés en parallèle.

Pour ce faire, la paroi 24 constitutive du coffre supérieur 20 est conformée de manière à délimiter un passage 28 pour un câble 30 de raccordement des modules.

Chaque coffre 18 et 20 est complété par des moyens de préhension, tels que 32, constitués par des orifices destinés à coopérer avec un appareil de levage en vue de leur montage ou de leur dépose.

On conçoit, qu'à l'état empilé, la source d'alimentation qui vient d'être décrite présente un encombrement minimum dans la mesure où l'on diminue l'espace libre non occupé.

En outre, le raccordement de la source 10 au véhicule électrique est grandement simplifié dans la mesure où les modules étant raccordés électriquement, seule une prise électrique 34 est nécessaire pour procéder à ce raccordement.

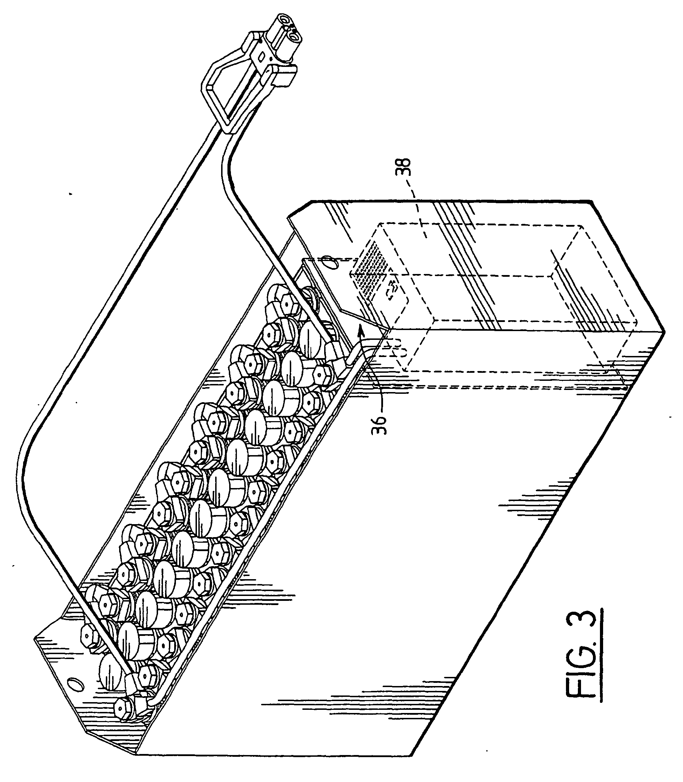

Comme cela est visible sur la figure 3, il est possible de prévoir, à un étage, un coffre pourvu d'un logement 36 pouvant recevoir un chargeur de batterie 38. On facilite alors grandement les opérations de recharge des batteries.

On notera que l'invention qui vient d'être décrite n'est pas limitée au mode de réalisation décrit.

Il serait en effet possible, en variante, de prévoir, dans chaque coffre, des cloisons mobiles permettant de séparer les batteries ou pour délimiter le logement de réception du chargeur.

## Revendications

1. Source d'alimentation en courant continu pour véhicule automoteur électrique, du type comportant un ensemble modulable de batteries (16) d'accumulateurs électriques, électriquement connectées, les batteries étant disposées dans des coffres (18, 20) gerbables pour constituer une pile de modules élémentaires (12, 14) **caractérisée en ce qu**'une partie au moins des coffres comporte une paroi latérale délimitant un passage (28) pour des câbles (30) de raccordement des batteries.

2. Source d'alimentation selon la revendication 1, **caractérisée en ce que** l'un au moins des coffres comporte un logement (36) de réception d'un chargeur (38) pour lesdites batteries.

3. Source d'alimentation selon l'une quelconque des revendications 1 ou 2, **caractérisée en ce que** la paroi latérale (22, 24) d'une partie au moins des coffres est munie d'ouies d'aération des batteries.

4. Source d'alimentation selon la revendication 3, **caractérisée en ce que** la paroi latérale (22, 24) desdits coffres ayant une hauteur supérieure à celle des batteries (16), les ouies sont délimitées par des découpes (26) formées dans la zone d'extrémité en saillie de ladite paroi latérale.

5. Source d'alimentation selon l'une quelconque des revendications 1 à 4, **caractérisée en ce que** la paroi latérale des coffres est dotée de moyens de préhension (32) destinés à coopérer avec un appareil de levage.

## Claims

1. Direct current power supply for electric automotive vehicle, of the type comprising an alterable set of electrically connected batteries (16) of electric accumulators, the batteries being arranged in stackable boxes (18, 20) so as to constitute a stack of elementary modules (12, 14), **characterized in that** a part at least of the boxes comprises a lateral wall delimiting a passage (28) for cables (30) for linking the batteries.

2. Power supply according to Claim 1, **characterized in that** one at least of the boxes comprises a housing (36) for receiving a charger (38) for the said batteries.

3. Power supply according to any one of Claims 1 or 2, **characterized in that** the lateral wall (22, 24) of a part at least of the boxes is furnished with openings for ventilating the batteries.

4. Power supply according to Claim 3, **characterized in that** the lateral wall (22, 24) of the said boxes having a greater height than that of the batteries (16), the openings are delimited by cutouts (26) formed in the end area projecting from the said lateral wall.

5. Power supply according to any one of Claims 1 to 4, **characterized in that** the lateral wall of the boxes is furnished with handling means (32) intended to cooperate with lifting equipment.

## Patentansprüche

1. Gleichstromversorgungsquelle für ein selbstfahrendes Elektrofahrzeug, umfassend eine modulierbare Einheit von elektrisch verbundenen Akkumulatorbatterien (16), wobei die Batterien in Kästen (18, 20) angeordnet sind, die stapelbar sind, um einen Stapel von Einzelmodulen (12, 14) zu bilden, **dadurch gekennzeichnet, dass** mindestens ein Teil der Kästen eine Seitenwand umfasst, die einen Durchgang (28) für Kabel (30) zur Verbindung der Batterien abgrenzt.

2. Versorgungsquelle nach Anspruch 1, **dadurch gekennzeichnet, dass** mindestens einer der Kästen eine Aufnahme (36) zum Aufnehmen eines Laders (38) für die Batterien umfasst.

3. Versorgungsquelle nach einem der Ansprüche 1 oder 2, **dadurch gekennzeichnet, dass** die Seitenwand (22, 24) mindestens eines Teils der Kästen mit Öffnungen zum Belüften der Batterien versehen ist.

4. Versorgungsquelle nach Anspruch 3, **dadurch gekennzeichnet, dass** die Seitenwand (22, 24) der Kästen eine Höhe besitzt, die größer als diejenige der Batterien (16) ist, und dass die Öffnungen von Ausschnitten (26) gebildet werden, die in der vorstehenden Endzone dieser Seitenwand gebildet sind.

5. Versorgungsquelle nach einem der Ansprüche 1 bis 4, **dadurch gekennzeichnet, dass** die Seitenwand der Kästen mit Greifmitteln (32) versehen ist, die dazu bestimmt sind, mit einer Hebevorrichtung zusammenzuwirken.
